# EUROPÄISCHE PATENTSCHRIFT

(11) **EP 0 860 355 B1**
(45) Veröffentlichungstag und Bekanntmachung des Hinweises auf die Patenterteilung: **20.08.2003**
(21) Anmeldenummer: 98103090.1
(22) Anmeldetag: 21.02.1998
(51) Int. Cl.: B64C 3/48

(54) **Aerodynamisches Bauteil, wie Landeklappe, Tragflügel, Höhen- oder Seitenleitwerk, mit veränderbarer Wölbung**
Aerodynamic structure with variable camber such as landing flaps, airfoil, horizontal and vertical stabilizer
Structure aerodynamique à courbure variable telle que volets d'atterrissage, aile, empennage horizontal et vertical

(30) Priorität: 25.02.1997 DE 19707392
(43) Veröffentlichungstag der Anmeldung: 26.08.1998
(73) Patentinhaber: Deutsches Zentrum für Luft- und Raumfahrt e.V., 53175 Bonn (DE)
(72) Erfinder: Campanile, Lucio Flavio, Dr.-Ing., 38102 Braunschweig (DE); Hanselka, Holger, 38122 Braunschweig (DE)
(74) Vertreter: Patentanwälte Rehberg + Hüppe

(56) Entgegenhaltungen:
- WO-A-94/26588
- FR-A- 554 771
- FR-A- 2 445 267
- US-A- 2 022 806
- US-A- 4 341 176
- US-A- 4 865 275

## Beschreibung

Die Erfindung bezieht sich auf ein aerodynamisches Bauteil für ein Fluggerät mit einer im Querschnitt längs der Anströmrichtung verformbaren Außenhaut und mit die Außenhaut im Querschnitt längs der Anströmrichtung aussteifenden, formveränderbaren Rippen mit veränderbarer Wölbung. Bei dem aerodynamischen Bauteil kann es sich um eine Landeklappe für einen Tragflügel eines Flugzeugs, um einen Tragflügel selbst, aber beispielsweise auch um ein Höhen- oder Seitenleitwerk und dgl. handeln.

Aerodynamische Bauteile können eine veränderbare äußere Gestalt aufweisen, um beispielsweise den Auftrieb eines Tragflügels zu verändern oder um ein Höhen- oder Seitenleitwerk zu betätigen. Diese Funktionen werden bei üblichen, nicht in ihrer Form veränderbaren aerodynamischen Bauteilen durch das Verschwenken angesetzter Klappen verwirklicht. Aerodynamische Bauteile mit einer im Querschnitt längs der Anströmrichtung verformbaren Außenhaut sind aus der US-A-3 179 357, der US-A-3 716 209, der US-A-3 987 984 und der US-A-4 349 169, bekannt. Aerodynamische Bauteile mit die Außenhaut im Querschnitt längs der Anströmrichtung aussteifenden, form-veränderbaren Rippen mit veränderbarer Wölbung zeigen die US 5 531 407, die US-A-4 865 275, die US-A-2 022 806 und die FR-A-2 445 267.

Aerodynamische Bauteile von Fluggeräten unterliegen dem strengen Diktat des Leichtbaus. Das heißt, Sie müssen bezüglich ihres Gewichts und ihrer lasttragenden Eigenschaften optimiert sein. Ein diesen Randbedingungen genügender, gängiger Aufbau eines Tragflügels weist eine Außenhaut auf, die durch jeweils längs der Anströmrichtung angeordnete Rippen ausgesteift ist. Die Rippen sind in der Haupterstreckungsrichtung der Außenhaut mit Abstand nebeneinander angeordnet. Die einzelnen Rippen können aus Platten bestehen, deren Randbereiche umlaufende Rahmen ausbilden. Die Außenhaut ist auf die Rahmen der Rippen aufgespannt und fest mit diesen verbunden. Hierdurch ergibt sich eine ausreichende Formstabilität, das heißt ausreichende lasttragende Eigenschaften des gesamten Tragflügels bei geringem Gewicht.

Der Erfindung liegt die Aufgabe zugrunde, ein den Randbedingungen des Leichtbaus genügendes aerodynamisches Bauteil mit veränderbarer Wölbung aufzuzeigen.

Erfindungsgemäß wird dies durch ein aerodynamisches Bauteil, wie beispielsweise eine Landeklappe, ein Tragflügel, ein Höhen- oder ein Seitenleitwerk, mit einer im Querschnitt längs der Anströmrichtung verformbaren Außenhaut und mit die Außenhaut im Querschnitt längs der Anströmrichtung aussteifenden, formveränderbaren Rippen mit veränderbarer Wölbung erreicht, gemaß dem Anspruch 1. Das neue aerodynamische Bauteil ist in seinem grundsätzlichen Aufbau einem bekannten Tragflügel mit fester äußerer Gestalt ähnlich. Die Versteifungsstreben resultieren jedoch nicht in eine vollständige Aussteifung der einzelnen Rippen, sondern lassen eine Verformung des bewußt biegsam ausgebildeten Außengürtels der Rippen zu. Bei dieser Verformung, die von der auf die Außengürtel aufgespannten verformbaren Außenhaut mitgemacht wird, verändern sich die Neigungswinkel zwischen dem Außengürtel und den am Außengürtel angreifenden Versteifungsstreben. Das heißt umgekehrt, daß durch einen Kraftangriff, der diese Neigungswinkel verändert, die Wölbung des aerodynamischen Bauteils eingestellt werden kann. Dabei bleibt der Außengürtel der Rippen geschlossen und wird in seinem Verformbereich wie ein Biegeträger im wesentlichen auf Biegung beansprucht. Außerhalb des Verformbereichs erfolgt die Beanspruchung im wesentlichen auf Druck und/oder Zug. Im Gewichtsvergleich zu einem aerodynamischen Bauteil mit starren Rippen entfällt bei dem neuen aerodynamischen Bauteil mit veränderbarer Wölbung die vollständige Aussteifung der Rippen. Insgesamt weist das neue aerodynamische Bauteil ein geringes Gewicht bei deutlich gesteigerter Funktionalität auf.

Für die Formveränderung der Rippen können mechanische Aktuatoren vorgesehen sein, die direkt oder indirekt an dem Außengürtel und/oder den Versteifungsstreben angreifen, so daß sich bei einer Ansteuerung der Aktuatoren die Neigungswinkel zwischen dem Außengürtel und den angreifenden Versteifungsstreben ändern.

Es ist aber auch möglich, eine bereits vorhandene Einrichtung zum Bewegen des aerodynmischen Bauteils zu verwenden, um die für die Formveränderung der Rippen erforderlichen Kräfte aufzubringen. Ebenso können aerodynamische Kräfte für die Formveränderung der Rippen herangezogen werden. In beiden Fällen ist eine Verriegelungseinrichtung vorzusehen, um wahlweise die veränderte Form der Rippen fixieren zu können.

Aerodynmische Kräfte können auch ausgenutzt werden, um den Kraftaufwand für mechanische Aktuatoren beim Überführen der Rippen in ihre veränderte Form nur zu reduzieren. Während für die vollständige Forvermänderung normalerweise spezielle aerodynamische Aktuatoren, wie beispielsweise aktivierbare Klappen, erforderlich sind, reicht zur Reduktion des Kraftaufwands für die Formveränderung eine geschickte Anordnung der Versteifungsstreben aus, so daß die elastischen und ggf. aerodynamischen Kräfte zum Verformen von bestimmten Bereichen des Außengürtels teilweise durch aerodynmaische Kräfte auf andere Bereiche des Außengürtels kompensiert werden.

Bei dem neuen aerodynamischen Bauteil sind die Rippen fest mit der Außenhaut verbunden, damit die Außenhaut alle Änderungen der Krümmung der Rippen in vollem Umfang mitmacht. Zudem wird bei einer festen Verbindung der Außenhaut mit den Rippen die Steifigkeit der Außenhaut für die Profilsteifigkeit des aerodynamischen Bauteils ausgenutzt.

Dies ist insbesondere wichtig, wenn die Versteifungsstreben über endseitige Gelenke an dem Außengürtel angreifen. Bei dieser Konstruktion weist die Verbindung zwischen den Versteifungsstreben und dem Außengürtel keine Biegesteifigkeit im Querschnitt längs der Anströmrichtung auf. Die gesamte Profilsteifigkeit des aerodynamischen Bauteils beruht dann auf der Biegesteifigkeit des Außengürtels der Rippen und der Außenhaut sowie der Aktuatoren. Unter einem endseitigen Gelenk einer Versteifungsstrebe ist hier in aller Regel keine mehrteilige Anordnung, sondern ein lokaler Bereich zwischen der Versteifungsstrebe und dem Außengürtel mit einer geringen Biegesteifigkeit zu verstehen. Um diesen Bereich können die Versteifungsstrebe und der Außengürtel gegeneinander verschwenkt werden.

Unter dem Aspekt der Profilsteifigkeit kann es sinnvoll sein, die Angriffsbereiche der Versteifungsstreben an dem Außengürtel relativ biegesteif auszubilden. Die Profilsteifigkeit des aerodynamischen Bauteils darf nämlich nicht zu gering sein, um ungewollte Formveränderungen aufgrund des Angriffs äußerer Kräfte zu verhindern. Die Biegesteifigkeit der Versteifungsstreben ist in jedem Fall deutlich größer zu wählen als die Biegesteifigkeit des Außengürtels der Rippen, damit das aerodynamische Bauteil beispielsweise nicht durch äußere Kräfte zusammengedrückt wird.

In einer konkreten Ausführungsform des neuen aerodynamischen Bauteils greifen die Aktuatoren jeweils einerseits an dem Außengürtel und andererseits an einer Versteifungsstrebe an, um den Neigungswinkel der jeweiligen Versteifungsstrebe gegenüber dem Außengürtel direkt zu beeinflussen. Es ist aber auch möglich, die Aktuatoren zwischen den Versteifungsstreben, zwischen deren Angriffsbereichen an dem Außengürtel und/oder zwischen Bereichen des Außengürtels wirken zu lassen. Die Aktuatoren können sich auch einseitig an einer tragenden Struktur, beispielsweise Holmen, des aerodynmischen Bauteils abstützen und von dieser aus den Außengürtel und/oder die Versteifungsstreben beaufschlagen. Weiterhin ist die Verwendung schichtförmiger Aktuatoren möglich. Diese können, beispielsweise in Form einer piezokeramischen Schicht, direkt auf dem Außengürtel angeordnet oder auch in einen Außengürtel aus einem FAserverbundwerkstoff integriert werden. Alternativ können Teile des Außengürtels beispielsweise aus einer Formdedächtnislegierung ausgebildet werden. Bei Ansteuerung der schichtförmigen Aktuatoren wird direkt die Wölbung des Außengürtels verändert. Aber auch in diesem Fall haben die Versteifungsstreben einen Einfluß auf die Änderung der Wölbung und verändern ihren Neigungswinkel gegenüber dem Außengürtel der Rippen.

An den beiden Enden jeder Versteifungsstrebe kann jeweils ein Aktuator vorgesehen sein, der einerseits an einem Außengürtel und andererseits an einer Versteifungsstrebe angreift. Dabei sollten die Aktuatoren jeweils im Bereich des kleineren Neigungswinkels zwischen der Versteifungsstrebe und dem Außengürtel angeordnet sein, weil hier die günstigeren Hebelverhältnisse für die gewünschte Verbiegung des Außengürtels gegeben sind.

Bei einem aerodynamischen Bauteil mit einer konkav gekrümmten Überdruckseite und einer konvex gekrümmten Unterdruckseite, also beispielsweise bei einer Landeklappe für den Tragflügel eines Flugzeugs, sind die Versteifungsstreben vorzugsweise so angeordnet, daß der Abstand zweier benachbarter Versteifungsstreben auf der konkav gekrümmten Überdruckseite kleiner ist als auf der konvex gekrümmten Unterdruckseite. Mit einer Veränderung des Neigungswinkels der Versteifungsstreben zu dem Außengürtel der Rippen wird sowohl die konkave Krümmung der Außenhaut auf der Überdruckseite als auch die konvexe Krümmung der Außenhaut auf der Unterdruckseite erhöht und damit der Auftrieb des Profils gesteigert. Die hier für den Fall einer Landeklappe konkret beschriebene Anordnung der Versteifungsstreben ist Ausdruck der allgemeineren Lehre, die Versteifungsstreben möglichst so anzuordnen, daß sie nur eine Kraftübertragung in Richtung der gewünschten Biegeverformung des Außengürtels der Rippen bewirken und eine Belastung des Außengürtels auf Druck oder Zug sowie reine, zu Ausbeulungen des Außengürtels führende Querbelastungen des Außengürtels vermieden werden.

Durch eine unterschiedliche Ansteuerbarkeit mehrerer, seitlich nebeneinander angeordneter Rippen kann auch eine Verdrillung der Außenhaut um eine Querachse senkrecht zu der Anströmrichtung erreicht werden. Dieser Effekt ist nicht nur zum Aufbringen einer gezielten Verdrillung der Außenhaut nutzbar. Vielmehr kann auch einer Verdrillung der Außenhaut durch den Angriff äußerer Kräfte gezielt entgegengewirkt werden.

Bei ausreichend biegesteifer Außenhaut muß der Außengürtel der Rippen bei dem neuen aerodynamischen Bauteil nicht als separates Strukturelement vorgesehen sein. Vielmehr ist es möglich, den Außengürtel der Rippen in die Außenhaut zu integrieren.

Die Erfindung wird im folgenden anhand von Ausführungsbeispielen näher erläutert und beschrieben. Dabei zeigt:
- Figur 1: einen Querschnitt durch eine Rippe eines erfindungsgemäßen aerodynamischen Bauteils in zwei Stellungen mit unterschiedlicher Wölbung,
- Figur 2: einen Querschnitt durch das erfindungsgemäße aerodynamische Bauteil mit der Rippe gemäß Figur 1,
- Figur 3: einen Querschnitt durch eine alternative Ausführungsform der Rippe des erfindungsgemäßen aerodynamischen Bauteils,
- Figur 4: eine perspektivische Ansicht des erfindungsgemäßen aerodynamischen Bauteils,
- Figur 5: eine schematische Darstellung einer Verdrillung des erfindungsgemäßen aerodynamische Bauteils,
- Figur 6: eine spezielle Ausführungsform des erfindungsgemäßen aerodynamischen Bauteils in perspektivischer Darstellung.
- Figur 7: eine Seitenansicht einer weiteren alternativen Ausführungsform einer Rippe des erfindungsgemäßen aerodynamischen Bauteils,
- Figur 8: eine Explosionszeichnung des aerodynamischen Bauteils mit einer praktischen Ausführungsform der Rippe gemäß Figur 7,
- Figur 9: eine Formveränderung der Rippe gemäß Figur 7,
- Figur 10: die Ansatzmöglichkeit von verschiedenen Aktuatoren an der Rippe gemäß Figur 7,
- Figur 11: das Ergebnis von zwei FEM-Simulationen betreffend eine Zuwölbung und eine Entwölbung der Rippe gemäß Figur 7,
- Figur 12: eine FEM-Simulation betreffend die Profilstabilität der Rippe gemäß Figur 7 bei Betriebsbelastung,
- Figur 13: das Ergebnis einer weiteren FEM-Simulation betreffend die Dehnung der einzelnen Strukturbereiche der Rippe gemäß Figur 7,
- Figur 14: ein Schaubild zur Energiebilanz bei der Verformung der Rippe 7 gemäß Figur 9,
- Figur 15: die Verwendung von aerodynamischen Aktuatoren zur Formveränderung der Rippe gemäß Figur 7 und
- Figur 16: ein Vorgehen zum Verformen der Rippe gemäß Figur 7 unter Verwendung einer vorhandenen Einrichtung zum Verschwenken des aerodynamischen Bauteils.

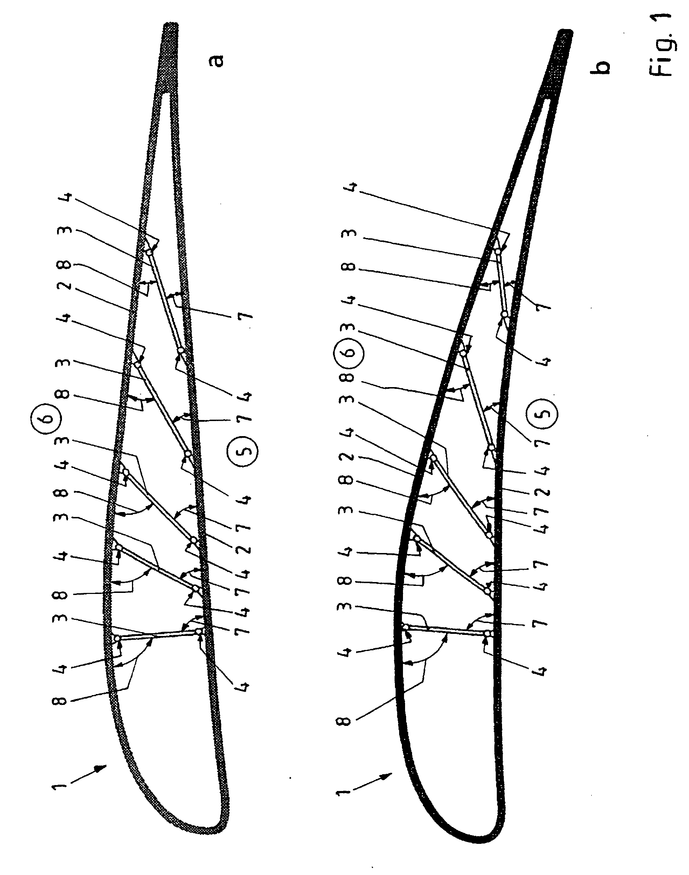

Bei den in den Figuren 1 bis 16 dargestellten erfindungsgemäßen aerodynamischen Bauteilen handelt es sich um Hochauftriebklappen eines hier nicht dargestellten Tragflügels eines Flugzeugs, die auch als Landeklappen bezeichnet wird. Die Erfindung ist jedoch nicht auf Hochauftriebklappen für Tragflügel beschränkt. Ihre Anwendung ist beispielsweise auch bei Tragflügeln selbst sowie bei Höhen- und Seitenleitwerken möglich. Die Beschreibung der Erfindung anhand von Landeklappen soll nur deren grundsätzliche Realisation erläutern.

In den Figuren 1a und 1b ist dieselbe Rippe 1 in zwei verschiedenen Stellungen wiedergegeben, wobei die Wölbung der Rippe 1 in der Stellung gemäß Figur 1b größer ist als in der Stellung gemäß Figur 1a. Die Rippe 1 besteht im wesentlichen aus einem biegsamen geschlossenen Außengürtel 2 und einer Mehrzahl von längenkonstanten Versteifungsstreben 3. Die Versteifungsstreben 3 greifen jeweils an ihren beiden Enden an dem Außengürtel 2 an. Dabei sind zwischen dem Außengürtel 2 und den Versteifungsstreben 3 jeweils Gelenke 4 ausgebildet. Die Gelenke 4 können wie in Figur 1 angedeutet mehrteilig oder auch durch einen besonders biegeweichen Bereich eines einzigen Teils ausgebildet sein. Die Angriffsbereiche der Versteifungsstreben 3 an dem Außengürtel 2 weisen durch die Gelenke 4 insgesamt keine nennenswerte Biegesteifigkeit auf. Hingegen sind die Versteifungsstreben 3 verglichen mit dem Außengürtel 2 extrem steif und verhindern ein Zusammendrücken des Außengürtels 2 unter der Einwirkung äußerer Kräfte. Gleichzeitig sind die Versteifungsstreben 3 aber derart angeordnet, daß sie eine gezielte Verformung der Rippe 1 zulassen. Hierbei handelt es sich um die Zunahme der Wölbung zwischen Figur 1a und Figur 1b. Konkret kreuzen sich die Versteifungsstreben nicht und die Abstände der Angriffsbereiche der Versteifungsstreben 3 an dem Außengürtel 2 sind auf einer Überdruckseite 5 der Rippe 1 kleiner als auf einer Unterdruckseite 6 der Rippe 1. Mit der Veränderung der Wölbung der Rippe 1 ändern sich die Neigungswinkel 7 und 8 zwischen dem Außengürtel 2 und den Versteifungsstreben 3. Die in Figur 1 eingezeichneten Neigungswinkel 7 und 8 nehmen bei zunehmender Wölbung der Rippe 1 ab.

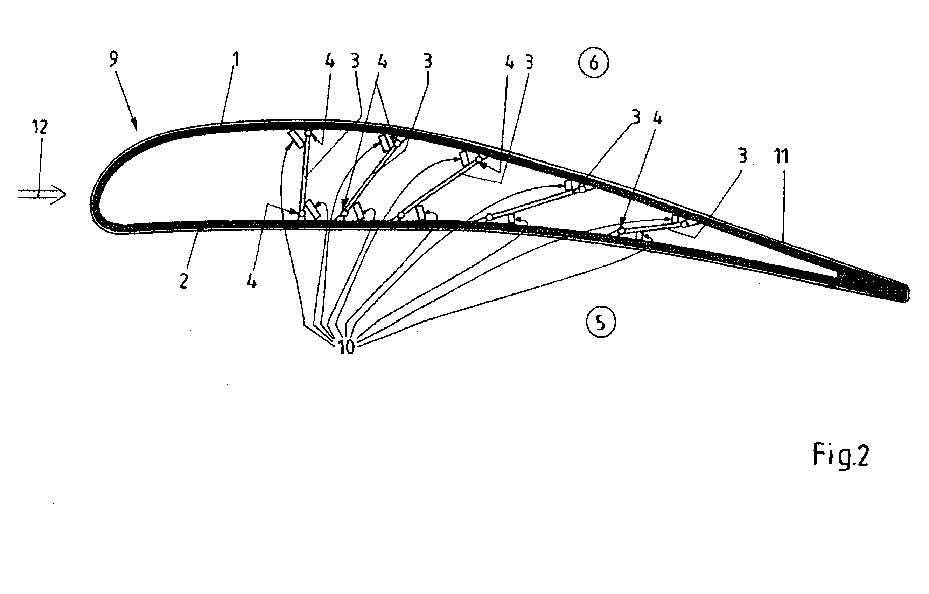

Dieser Zusammenhang zwischen der Wölbung der Rippe 1 und den Neigungswinkeln 7 und 8 wird bei dem aerodynamischen Bauteil 9 gemäß Figur 2 zur willkürlichen Änderung der Wölbung genutzt. Hierfür sind zwischen dem Außengürtel 2 und den Versteifungsstreben 3 wirkende mechanische Aktuatoren 10 im Bereich der hier nicht eingezeichneten Neigungswinkel 7 und 8 gemäß Figur 1 angeordnet. Bei den Aktuatoren 10 kann es sich um bekannte mechanische Aktuatoren auf der Basis beispielsweise von Piezokristallen oder magnetostriktiven Materialien handeln. Die Rippe 1 ist mit einer Außenhaut 11 bespannt und fest verbunden. Die Außenhaut 11 bildet die äußere Oberfläche des aerodynamischen Bauteils 9. Die gesamte Biegesteifigkeit des aerodynamischen Bauteils 9 in der Zeichenebene gemäß Figur 2, bei der es sich um einen Querschnitt längs der Anströmrichtung 12 handelt, setzt sich aus Anteilen der Biegesteifigkeiten den Außengürtels 2 und der Außenhaut 11 sowie der Steifigkeit der Aktuatoren 10 zusammen. Die Versteifungsstreben 3 können dabei als starr angesehen werden. Die Aktuatoren 10 sind jeweils im Bereich der kleineren Neigungswinkel zu dem Außengürtel 2 der Rippe 1 angeordnet, weil hier günstigere Einbaubedingungen vorliegen und weil auch die Hebelverhältnisse für eine Verbiegung des Außengürtels 2 günstiger sind.

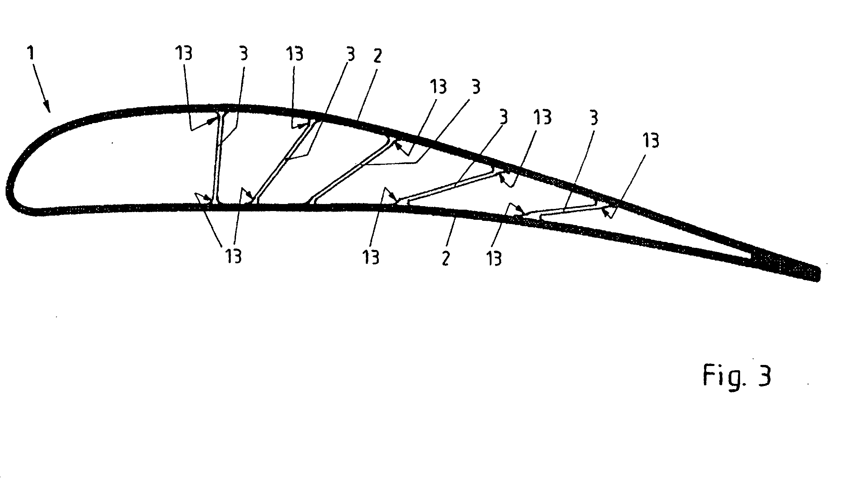

Bei der in Figur 3 angedeuteten alternativen Ausführungsform einer Rippe 1 sind die Übergangsbereiche 13 zwischen den Versteifungsstreben 3 und dem Außengürtel 2 biegesteif ausgebildet. Das heißt, es sind keine Gelenke 4 wie bei der Ausführungsform gemäß den Figuren 1 und 2 vorgesehen. Vielmehr sind sogar Materialverstärkungen vorhanden, um ein Abknicken der Versteifungsstreben 3 in diesen Angriffsbereichen zu verhindern. Die Ausführungsform der Rippe 1 gemäß Figur 3 hat den Vorteil, daß die Biegesteifigkeit deutlich größer ist als bei der Ausführungsform gemäß den Figuren 1 und 2. Dies bedeutet natürlich auch, daß eine Verformung zur Änderung der Wölbung der Rippe 1 nur mit größeren Kräften eingeleitet werden kann als bei der Ausführungsform gemäß den Figuren 1 und 2.

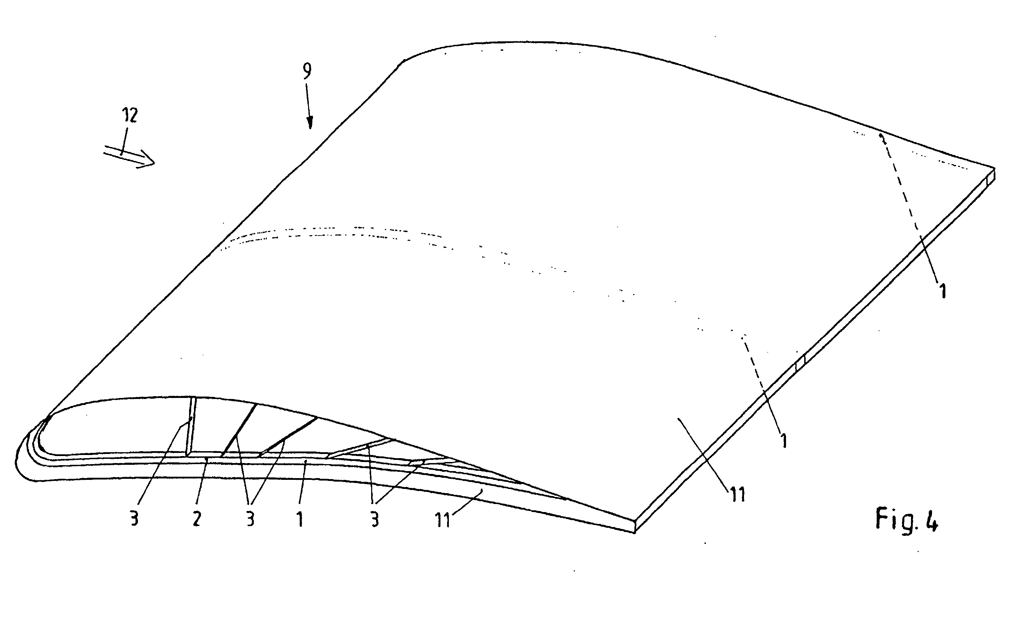

Figur 4 ist die perspektivische Darstellung eines Abschnitts des aerodynamischen Bauteils 9, das heißt der hier als Beispiel verwendeten Landeklappe. Dabei sind die sichtbaren Bestandteile der vorderen Rippe 1 vereinfacht wiedergegeben. In der Haupterstreckungsrichtung des aerodynamischen Bauteils 9 sind seitlich nebeneinander mehrere Rippen 1 angeordnet und jeweils fest mit der Außenhaut 11 verbunden.

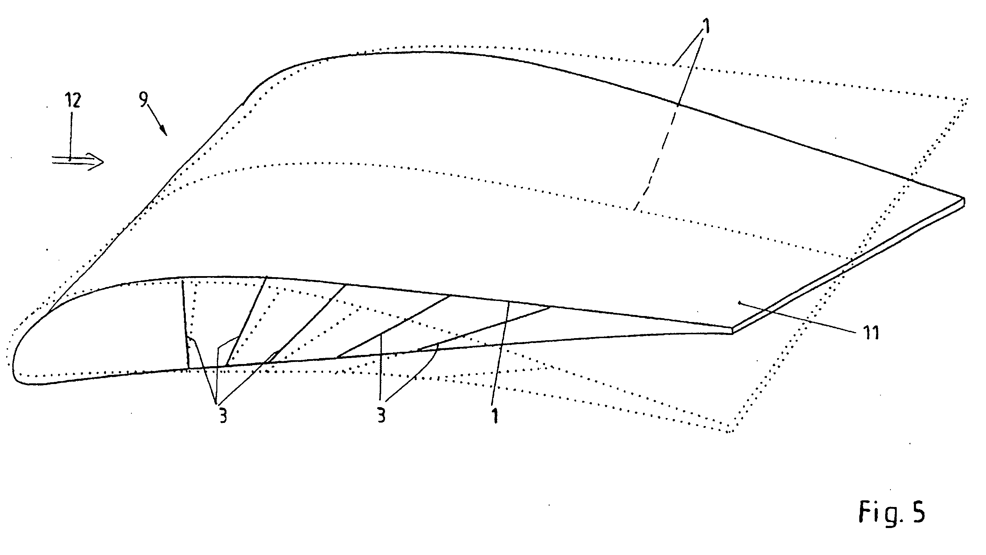

Wenn beispielsweise die mittlere von 3 nebeneinander angeordneten Rippen 1 nicht und die beiden äußeren Rippen 1 gegensinnig auf eine Formänderung angesteuert werden, ergibt sich eine Verdrillung des aerodynamischen Bauteils 9, die in Figur 5 skizziert ist. Figur 5 gibt mit punktierten Linien eine schematische perspektivische Darstellung des aerodynamischen Bauteils 9 wieder, die etwa Figur 4 entspricht. Mit durchgezogenen Linien ist das verdrillte aerodynamische Bauteil 9 ebenfalls schematisch und perspektivisch dargestellt.

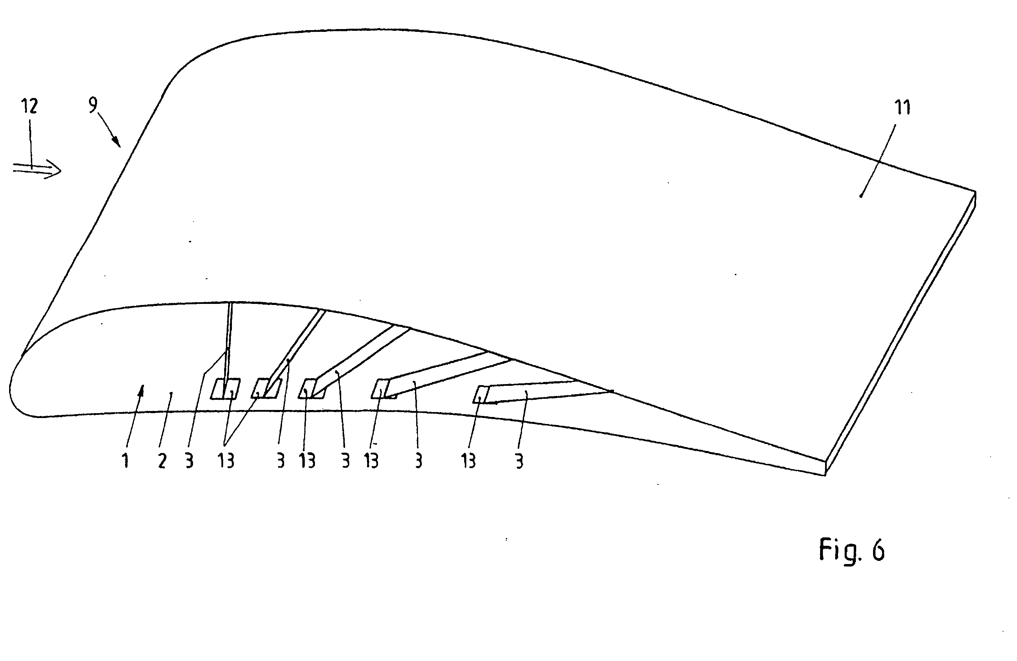

Bei der Ausführungsform des aerodynamischen Bauteils 9 gemäß Figur 6 ist der Außengürtel 2 der sichtbaren Rippe 1 einstückig mit der Außenhaut 11 ausgebildet bzw. in diese integriert. Das heißt, neben der Außenhaut 11 ist kein separater Außengürtel 2 vorhanden. Die Versteifungsstreben 3 greifen in verstärken Angriffsbereichen 13 unmittelbar an der Außenhaut 11 an, die dabei auch den Außengürtel bildet. Hierdurch wird ein noch leichterer Aufbau des aerodynamischen Bauteils 9 erreicht als bei der Ausführungsform gemäß den Figuren 1 bis 5.

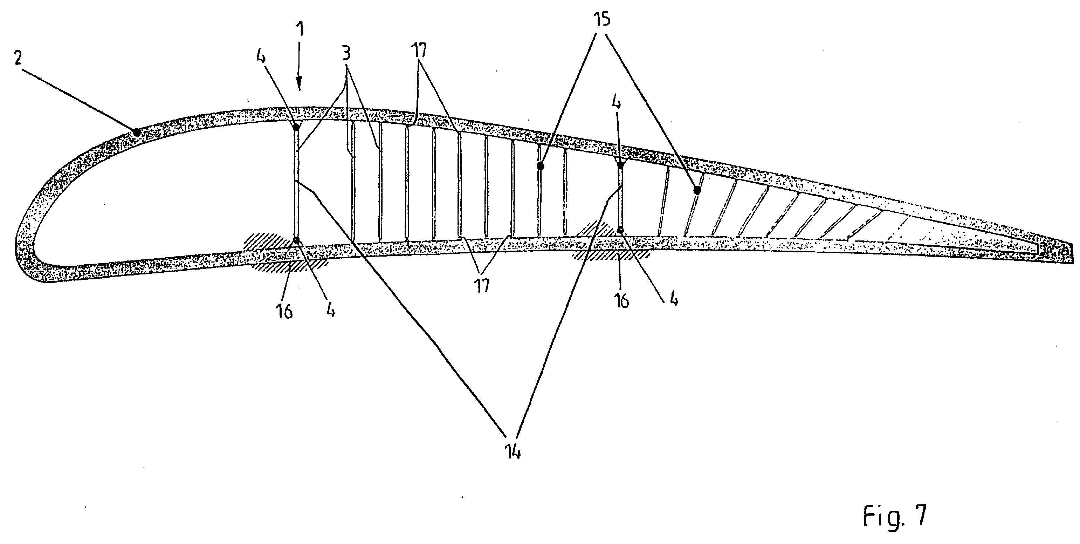

Die in Figur 7 dargestellte Rippe 1 weist zwei Arten von längenkonstanten Versteifungsstreben 3 auf. Zwei Versteifungsstreben 3 sind als Hauptstreben 14 ausgebildet, während die anderen Versteifungsstreben 3 Nebenstreben 15 ausbilden. Die Hauptstreben 14 sind besonders stabil ausgebildet und für die Lagerung der Rippe 1 an einer tragenden Struktur 16, die in Form straffierter Flächen angedeutet ist, vorgesehen. Die Lagerung der Rippe 1 an der tragenden Struktur 16 ist zur Abtragung der auf die Rippe 1 über die hier nicht dargestellte Außenhaut einwirkenden aerodynamischen Kräfte notwendig. Die Nebenstreben 15 zwischen den Hauptstreben 14 sind parallel zueinander und parallel zu den Hauptstreben 14 angeordnet. Die Nebenstreben 15 hinter der hinteren Hauptstrebe 14 sind mit zunehmender Neigung angeordnet. Dabei handelt es sich um eine optimierte Anordnung, die eine Konzentration der Wölbflexibilität der Rippe 1 in ihrem hinteren Bereich realisiert. Die Anschlüsse zwischen den Versteifungsstreben 3 und dem Außengürtel 2 sind als biegeweiche Anschlüsse realisierend. Bei den Hauptstreben 14 sind Gelenke 4 vorgesehen. Bei den Nebenstreben 15 sind die Anschlüsse als Sollbiegestellen 17 ausgebildet, was aufgrund der hier geringeren Belastung ausreichend ist.

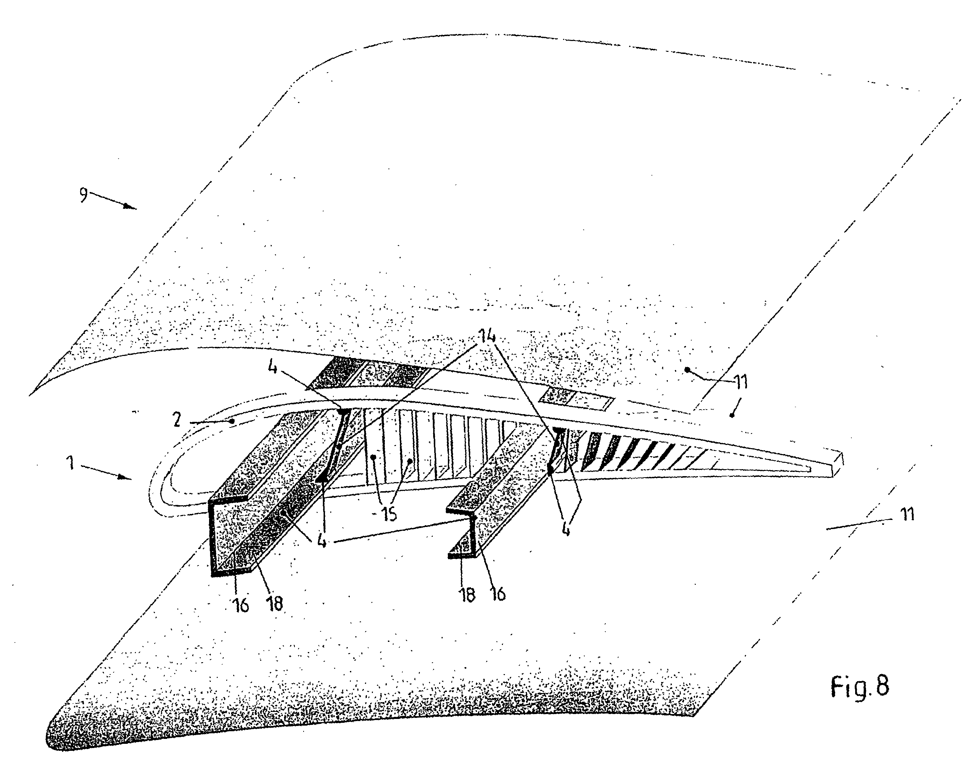

Aus Figur 8 geht eine mögliche Anbindung der Rippe 1 an die tragende Struktur 16 hervor. Es sind zwei Holme 18 als Bestandteil der tragenden Struktur 16 vorgesehen. Holme sind in den meisten üblichen Flügelstrukturen vorhanden. Die Holme 16 sind im Bereich der unteren Gelenke 4 mit den Hauptspeichen 14 und so mit der gesamten Rippe 1 verbunden. Dabei stützt sich der Außengürtel 2 an der Unterseite der Holme 16 ab. In Figur 8 ist auch die Außenhaut 11 des aerodynamischen Bauteils 9 dargestellt, wobei sie in eine Unterseite und eine Oberseite aufgeteilt ist.

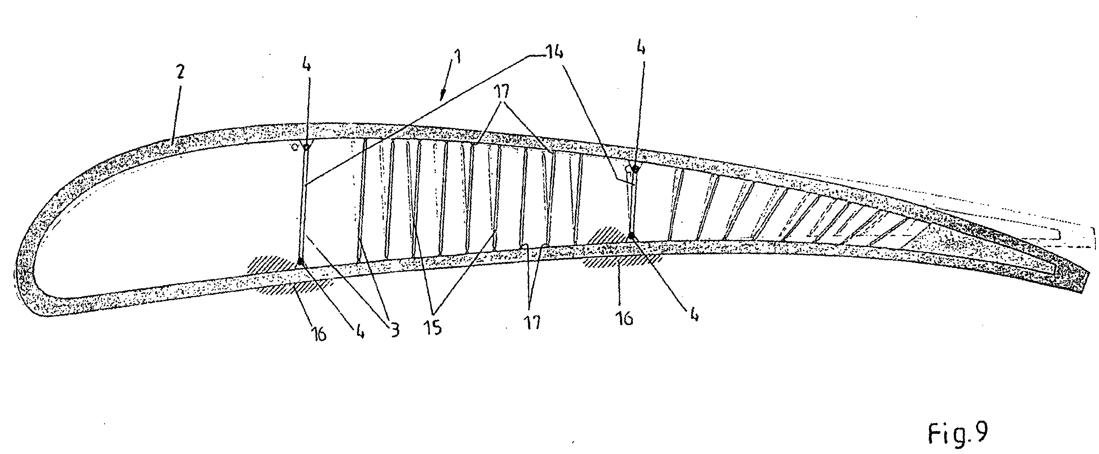

Figur 9 zeigt die Rippe 1 gemäß Figur 7 im verformten Zustand, wobei im Hintergrund die unverformte Rippe 1 wiedergegeben ist. Die Krümmungsveränderung der Rippe 1 in ihrem hinteren Wölbbereich ist deutlich zu erkennen. Durch die spezielle Anordnung der Versteifungsstreben 3 gegenüber dem Außengürtel 2 ergibt sich die in Figur 9 gezeigte Verformung relativ unabhängig davon, wo die Kräfte für die Verformung aufgebracht werden. Es besteht demnach eine Vielzahl von Ansatzmöglichkeiten für Aktuatoren, und die Rippe 1 ist auf keine bestimmte Art oder Wirkungsweise von Aktuatoren angewiesen.

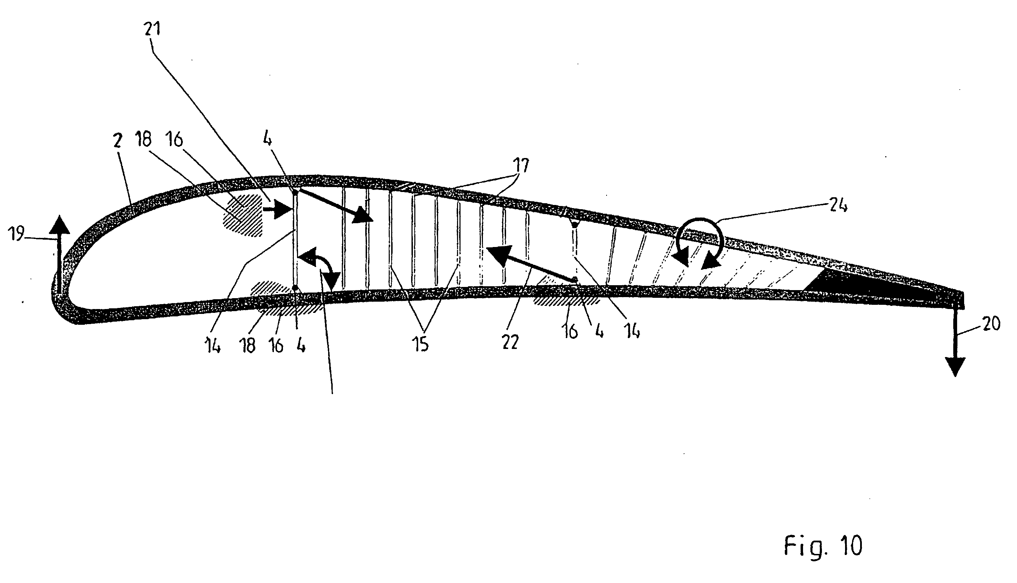

Figur 10 skizziert verschiedene Angriffsmöglichkeiten für Aktuatoren an der Rippe 1 gemäß Figur 7, um die Formveränderung gemäß Figur 9 zu erreichen. Ein Pfeil 19 deutet an, wie im Nasenbereich der Rippe die Verformung durch eine aufwärts gerichtete Kraft erreicht werden kann. Beispielsweise durch einen aerodynamischen Aktuator in Form einer aktivierbaren Klappe. Entsprechend deutet ein Pfeil 20 an, wie im Hinterkantenbereich der Rippe 1 durch eine abwärts gerichtete Kraft die Verformung auch erreicht werden kann. Ein Pfeil 21 steht für einen Aktuator zwischen einem Holm 18 der tragenden Struktur 16 und der vorderen Hauptstrebe 14. Pfeile 22 stehen für den Angriff eines Aktuators zwischen dem oberen Gelenk 4 der vorderen Hauptstrebe 14 und dem unteren Gelenk 4 der hinteren Hauptstrebe 14. Ein Drehpfeil 23 steht für ein aktives Gelenk zwischen dem Außengürtel 2 und der vorderen Hauptstrebe 14 in deren unteren Bereich bzw. für einen um das untere Gelenk 4 der vorderen Hauptstrebe 14 wirkenden Aktuator. Ein weiterer Drehpfeil 24 steht für eine strukturintegrierte Aktuatorik im hinteren Wölbbereich.

Die in den folgenden Figuren dargestellten Ergebnisse von FEM-Simulationen basieren auf einem Modell der Gürtelrippe 1 gemäß Figur 7 mit den folgenden Daten:

| | |
|---|---|
| Profiltiefe | 1500 mm |
| Gürtelquerschnitt | 50 mm Breite, 10 mm Stärke |
| Material | Aluminium |
| Antrieb | horizontale Kraft an der vorderen Hauptstrebe. |

Das Model bezieht sich auf die Hochauftriebsklappe eines großen Verkehrsflugzeugs.

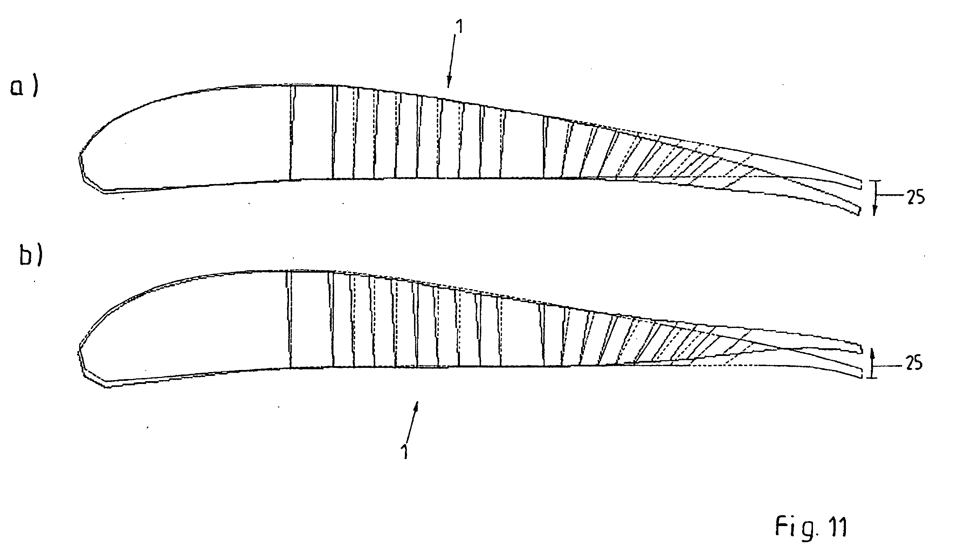

Figur 11 zeigt die Verformung aufgrund einer horizontalen Kraft von 2.600 N auf die vordere Hauptspeiche etwa in Richtung des Pfeils 21 gemäß Figur 10. Dabei ist die Kraft gemäß Figur 11 a) nach rechts gerichtet und führt zu einer Zuwölbung der Rippe 1, während die Kraft gemäß Figur 11 b nach links gerichtet ist und zu einer Entwölbung der Rippe 1 führt. Die vertikale Auslenkung 25 der Rippe 1 an ihrer Hinterkante beträgt in beiden Fällen etwa 47 mm, jedoch in unterschiedlicher Richtung. Hierdurch können die aerodynamischen Eigenschaften eines aerodynamischen Bauteils mit der Rippe 1 bereits in erheblichem Umfang verändert werden.

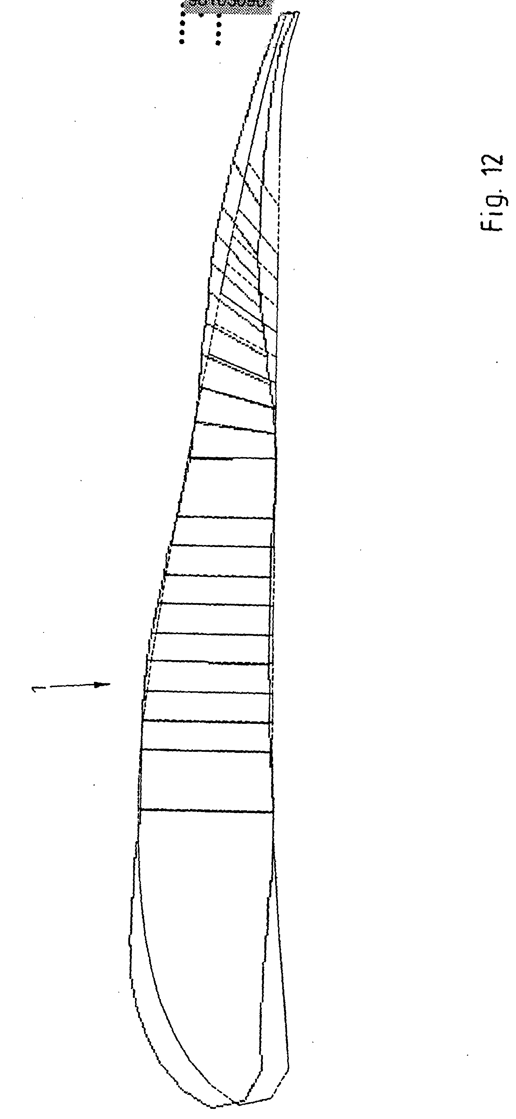

Das in Figur 12 dargestellte Ergebnis einer weiteren FEM-Simulation bezieht sich auf die Formstabilität der Rippe 1 gemäß Figur 7 mit den obigen Daten gegenüber äußeren Kräften. Zugrundegelegt ist eine typische Betriebsbelastung in der Größenordnung von 3.000 N/m. Die sich hieraus ergebende maximale Auslenkung des Profils der Rippe 1 ist in Figur 12 stark vergrößert dargestellt und beträgt in vertikaler Richtung an keiner Stelle mehr als 3 mm. Das heißt, die passive Verformung der Rippe 1 durch Betriebsbelastungen ist mehr als eine Größenordnung kleiner als die gewollte Verformung der Rippe 1 gemäß Figur 11.

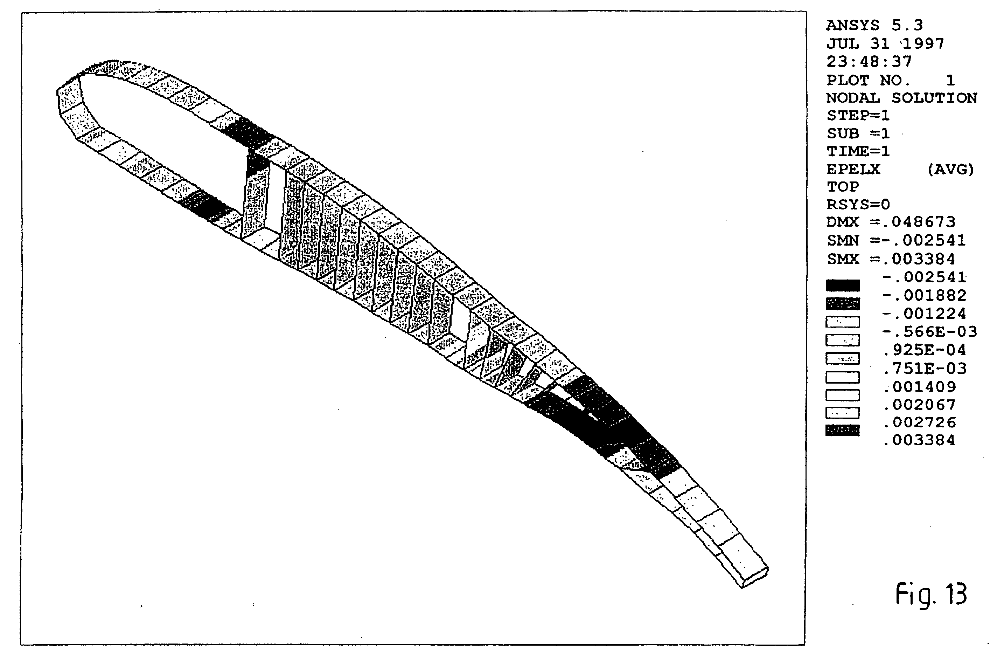

Figur 13 gibt das Ergebnis einer weiteren FEM-Berechnung wieder. Zugrundegelegt ist der Berechnung die maximale Belastung, mit der im Betrieb zu rechnen ist (Manöverlast), versehen mit einem Sicherheitsfaktor von 1,5. Dies ergibt eine nominelle Belastung von ca. 8.000 N/m. Hierbei beträgt die maximale Dehnung im Bereich des Gürtels 2 und der Versteifungsstreben 3 weniger als 0,34 % und liegt damit im unkritischen Bereich.

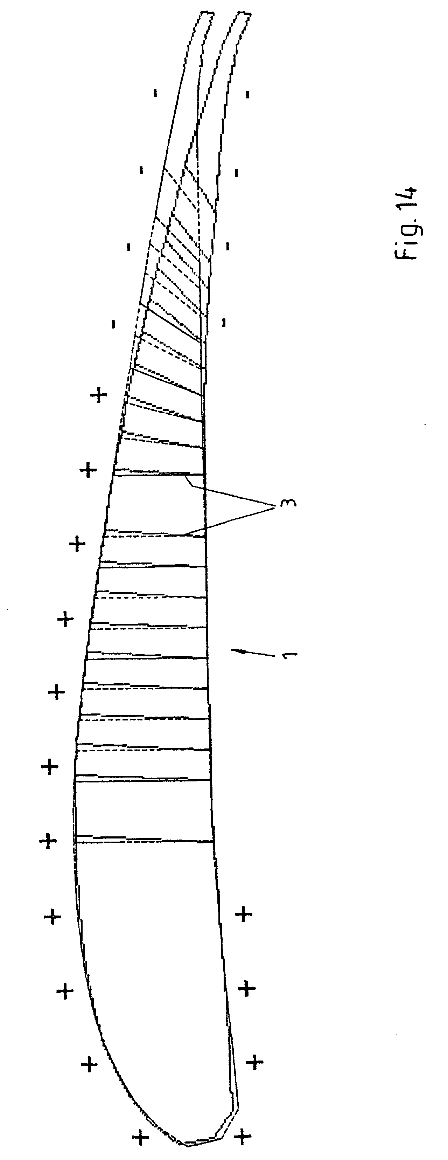

Die Rippe 1 gemäß Figur 7 weist eine besonders günstige Energiebilanz bei einem Aktuatorangriff zum Zwecke ihrer Verformung auf. Durch Anordnung der Versteifungsstreben 3 unter aerodynamischen Gesichtspunkten wird bewirkt, daß die Richtung der Auslenkung in weiten Bereichen des Profils entgegengesetzt zur Richtung im Wölbbereich ist. Dies führt dazu, daß ein Teil der mechanischen Arbeit, die beispielsweise zur Absenkung des Wölbbereichs erforderlich ist, über die anderen Bereiche des Profils aus aerodynamischen Kräften aufgrund der Anströmung des jeweiligen aerodynamischen Bauteils gewonnen wird. In Figur 14 sind die Bereiche, in denen der Formveränderung entgegenstehende aerodynamische Kräfte auftreten mit einem Minus-Zeichen markiert, während die Bereiche, in denen die Formveränderung unterstützende aerodynamische Kräfte auftreten mit einem PlusZeichen markiert sind. Der relativ größere Anteil der mit PlusZeichen markierten Bereiche macht deutlich, daß die Möglichkeit besteht, hier Energie zu gewinnen, die für die Verformung der Rippe 1 erforderlich ist. Bis zu 50 % der erforderlichen Gesamtenergie können hieraus bezogen werden.

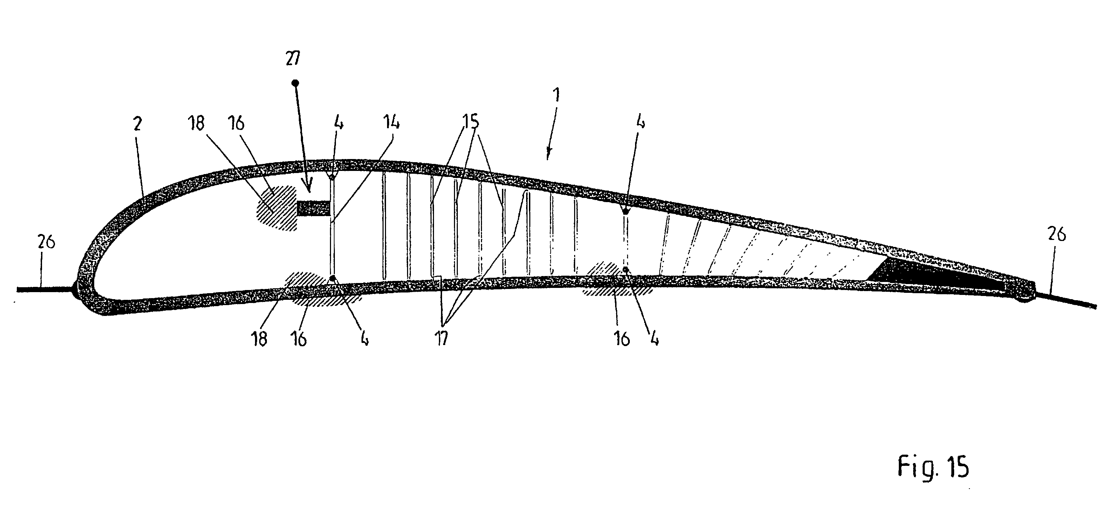

Figur 15 skizziert wie durch aerodynamische Aktuatoren 26 im Nasen- und/oder Hinterkantenbereich der Rippe 1 zusätzliche aerodynamische Kräfte generiert werden können, um ausschließlich mit diesen die gewünschte Formveränderung der Rippe 1 herbeizuführen. Bei den aerodynamischen Aktuatoren 26 kann es sich beispielsweise um aktivierbare Klappen handeln, die in unterschiedlichen Winkeln zu dem Außengürtel 2 der Rippe 1 anstellbar sind. Damit sind aerodynamische Kräfte in Richtung der Pfeile 19 und 20 gemäß Figur 10 oder entgegengesetzt zu diesen Pfeilen hervorrufbar. Die aerodynamischen Aktuatoren 26 sind aber nicht dazu geeignet, eine Formveränderung der Rippe 1 zu konservieren. Hierfür ist eine zusätzlich Verriegelungseinrichtung 27 vorgesehen, die hier zwischen dem vorderen Holm 18 der tragenden Struktur 16 und der vorderen Hauptstrebe 14 wirkt. Die aerodynamischen Aktuatoren 26 werden nur solange benötigt und entsprechend nur so lange aktiviert, bis die gewünschte Formveränderung herbeigeführt ist. Dann wird die Formveränderung mit der Verriegelungseinrichtung 27 fixiert. Anschließend können die aerodynamischen Aktuatoren 26 wieder in ihre neutrale Stellung zurückgeführt werden, um beispielsweise keine unerwünschte zusätzliche Strömungsreibung hervorzurufen. Statt der klappenförmigen aerodynamischen Aktuatoren gemäß Figur 15 sind beispielsweise auch aktiv verformbare Flächenelemente des aerodynamischen Bauteils mit integrierten Festkörperaktuatoren denkbar.

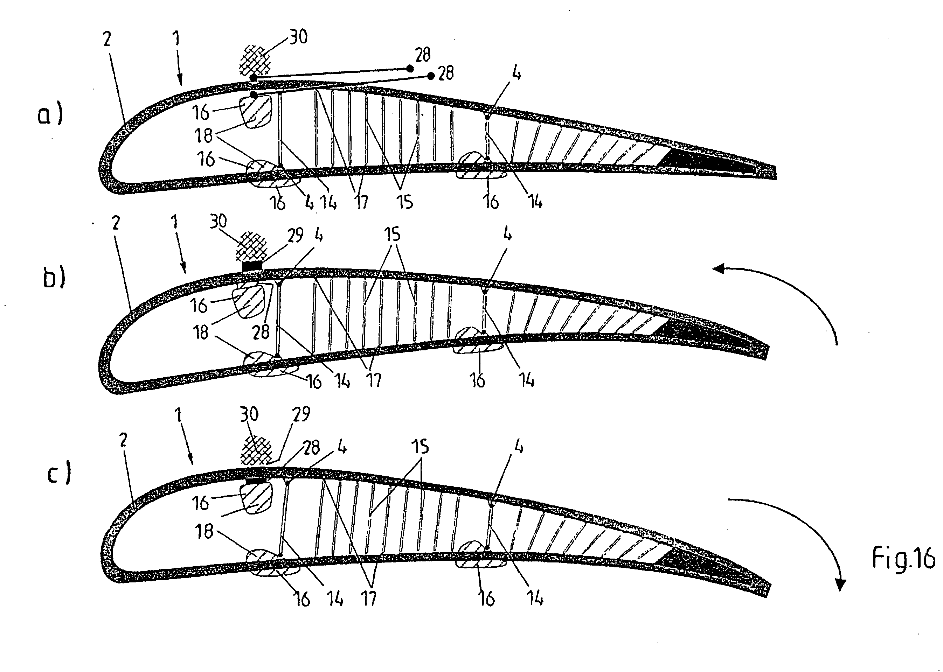

Für den spezifischen Fall einer Hochauftriebsklappe eines großen Verkehrsflugzeugs wurde ein besonderes Antriebskonzept für die gewünschte Formveränderung der Rippe 1 gemäß Figur 7 entwickelt. Dieses Antriebskonzept nutzt den bestehenden Klappenantrieb zur Verformung des aerodynamischen Bauteils aus und benötigt keine zusätzliche Aktuatorik. Die Funktionsweise des Antriebskonzepts wird im folgenden anhand von Figur 16 erläutert. Die Rippe 1 verfügt über zwei Koppelmechanismen 28 und 29, die einen Bereich des Außengürtels 2 wahlweise mit der tragenden Struktur 16 oder mit einer übergeordneten Struktur 30, beispielsweise mit dem Flügelkasten des Flügels, an dem die Hochauftriebsklappe gelagert ist, fest verbinden. Die Koppelmechanismen 28 und 29 können beispielsweise wie eine Bremse bzw. Kupplung ausgebildet sein. Wird die Hochauftriebsklappe durch den vorhandenen Klappenantrieb eingefahren, während der Koppelmechanismus zwischen dem Außengürtel und der übergeordneten Struktur 30 aktiv ist, so verformt sich der Außengürtel so, daß sich der hintere Wölbbereich zuwölbt (Figur 16 b)). Wird jetzt der Koppelmechanismus 28 mit der tragenden Struktur 16 aktiviert und der Koppelmechanismus 29 deaktiviert, so kann die Hochauftriebsklappe in verformtem Zustand in die ursprüngliche Position zurückgefahren werden (Figur 16 c)). Mit einem ähnlichen Konzept können auch andere aerodynamische Bauteile, wie z. B. Quer-, Höhen- oder Seitenruder, bezüglich ihrer Verformung betätigt werden.

### BEZUGSZEICHENLISTE

- 1 -: Rippe
- 2 -: Außengürtel
- 3 -: Versteifungsstrebe
- 4 -: Gelenk
- 5 -: Überdruckseite
- 6 -: Unterdruckseite
- 7 -: Neigungswinkel
- 8 -: Neigungswinkel
- 9 -: aerodynamisches Bauteil
- 10 -: mechanischer Aktuator

- 11 -: Außenhaut
- 12 -: Anströmrichtung
- 13 -: Angriffsbereich
- 14 -: Hauptstrebe
- 15 -: Nebenstrebe
- 16 -: tragende Struktur
- 17 -: Sollbiegestellen
- 18 -: Holm
- 19 -: Pfeil
- 20 -: Pfeil

- 21 -: Pfeil
- 22 -: Pfeil
- 23 -: Drehpfeil
- 24 -: Drehpfeil
- 25 -: Auslenkung
- 26 -: aerodynamischer Aktuator
- 27 -: Verriegelungseinrichtung
- 28 -: Koppelmechanismus
- 29 -: Koppelmechanismus
- 30 -: übergeordnete Struktur

## Patentansprüche

1. Aerodynamisches Bauteil (9) für ein Fluggerät, wie Landeklappe, Tragflügel, Höhen- oder Seitenleitwerk, mit einer im Querschnitt längs der Anströmrichtung (12) verformbaren Außenhaut (11) und mit die Außenhaut (11) im Querschnitt längs der Anströmrichtung (12) aussteifenden, formveränderbaren Rippen (1) mit veränderbarer Wölbung,
wobei die Rippen (1) einen biegsamen geschlossenen fest mit der Außenhaut (10) verbundenen Außengürtel (2), dessen äußere Form dem Verlauf der Außenhaut (11) entspricht, und mehrere an ihren beiden Enden an dem Außengürtel (2) angreifende längenkonstante Versteifungsstreben (3) aufweisen;
wobei mindestens ein mechanische oder aerodynamischer Aktuator (10; 26) zum Verformen der Rippen (1) vorgesehen ist, der direkt oder indirekt an dem Außengürtel (2) und/oder den Versteifungsstreben (3) angreift, mit dem eine gewünschte konservierbove Formveränderung der Rippen (1) herbeiführbar ist, welche durch die maseimale Belastung des Bauteils (9) im Betrieb nicht erreichbar ist.

2. Aerodynamisches Bauteil nach Anspruch 1, **dadurch gekennzeichnet, daß** mindestens ein mechanischer Aktuator (10) zum Verformen der Rippen (1) vorgesehen ist, der direkt oder indirekt an dem Außengürtel (2) und/oder den Versteifungsstreben (3) angreift, so daß sich bei einer Ansteuerung des Aktuators (10) die Neigungswinkel (7, 8) zwischen dem Außengürtel (2) und den angreifenden Versteifungsstreben (3) ändern.

3. Aerodynamisches Bauteil nach Anspruch 2, **dadurch gekennzeichnet, daß** eine Einrichtung zum Bewegen des aerodynamischen Bauteils (9) zum Verformen der Rippen (1) vorgesehen ist.

4. Aerodynamisches Bauteil nach Anspruch 1, **dadurch gekennzeichnet, daß** mindestens ein aerodynamischer Aktuator (26) zum Verformen der Rippen (1) vorgesehen ist, der direkt oder indirekt an dem Außengürtel (2) angreift.

5. Aerodynamisches Bauteil nach einem der Ansprüche 1 bis 4, **dadurch gekennzeichnet, daß** die Versteifungsstreben (3) so an dem Außengürtel (2) angreifen, das eine gewollte Formänderung der Rippen (1) durch aerodynamische Kräfte unterstützt wird.

6. Aerodynamisches Bauteil nach einem der Ansprüche 1 bis 5, **dadurch gekennzeichnet, daß** die Versteifungsstreben (3) über endseitige Gelenke (4) an dem Außengürtel (2) angreifen.

7. Aerodynamisches Bauteil nach einem der Ansprüche 1 bis 6 und mit einer konkav gekrümmten Überdruckseite und einer konvex gekrümmten Unterdruckseite, **dadurch gekennzeichnet, daß** der Abstand zweier benachbarter Versteifungsstreben (3) am Außengüntel (2) auf der konkav gekrümmten Überdruckseite (5) kleiner ist als auf der konvex gekrümmten Unterdruckseite (6).

8. Aerodynamisches Bauteil nach einem der Ansprüche 1 bis 7, **dadurch gekennzeichnet, daß** mehrere, seitlich nebeneinander angeordnete Rippen (1) derart unterschiedlich ansteuerbar sind, daß sich eine Verdrillung der Außenhaut (11) um eine Querachse ergibt.

9. Aerodynamisches Bauteil nach einem der Ansprüche 1 bis 8, **dadurch gekennzeichnet, daß** der Außengürtel (2) der Rippen (1) in die Außenhaut (11) integriert ist.

## Claims

1. An aerodynamic structure for an aerodynamic vehicle, such as a landing flap, an airfoil, a horizontal or a vertical stabilizer, the aerodynamic structure comprising an outer skin (11) deformable in cross section longitudinal to the air stream direction (12), and deformable ribs (1) with variable camber which are stiffening said outer skin in cross section longitudinal to said air stream direction (12);
the ribs (1) having a dosed flexible external girdle which is fixedly connected to the outer skin (11) and which has an outer shape corresponding to the course of said outer skin (11), and a plurality of stiffening struts (3) of constant length engaging said external girdle (2) at both of their ends;
at least one mechanical or aerodynamic actuator (10; 26) being provided for deforming the ribs (1) which directly or indirectly engages the external girdle (2) and/or the stiffening struts (3) and by means of which a desired conservable change in shape of the ribs (1) can be effected, which change in shape is not achieved by the maximum load on the structure (9) during operation.

2. The aerodynamic structure of claim 1, **characterized in that** at least one mechanical actuator (10) is provided for deforming the ribs (1) which directly or indirectly engages the external girdle (2) and/or the stiffening struts (3), so that upon operating the actuator (10) the angles of inclination (7, 8) between the external girdle (2) and the engaging stiffening struts (3) is changed.

3. The aerodynamic structure of claim 2, **characterized in that** a device for moving the aerodynamic structure (9) is provided for deforming the ribs (1).

4. The aerodynamic structure of claim 1, **characterized in that** at least one aerodynamic actuator (26) is provided for deforming the ribs (1) which directly or indirectly engages the external girdle (2).

5. The aerodynamic structure of any of the claims 1 to 4, **characterized in that** the stiffening struts (3) engage the external girdle (2) in such a way that a desired change in shape of the ribs (1) is supported by aerodynamic forces.

6. The aerodynamic structure of any of the claims 1 to 5, **characterized in that** the stiffening struts (3) engage the external girdle (2) via joints (4) at their ends.

7. The aerodynamic structure of any of the claims 1 to 6, and comprising a concave-curved side of high pressure and a convex-curved side of low pressure, **characterized in that** the distance between two neighbouring stiffening struts (3) at the external girdle (2) is smaller at the concave-curved side of high pressure (5) than at the convex-curved side of low pressure (6).

8. The aerodynamic structure of any of the claims 1 to 7, **characterized in that** a plurality of ribs (1) is provided, which are laterally arranged side by side and which can be operated in such different ways that a torsion of the outer skin (11) about a cross axis is effected.

9. The aerodynamic structure of any of the claims 1 to 8, **characterized in that** the external girdle (2) of the ribs (1) is integrated into the outer skin (10).

## Revendications

1. Composant aérodynamique (9) pour un aéronef, tel que volet d'atterrissage, aile portante, empennage d'altitude ou empennage de direction, comportant une enveloppe extérieure (11) déformable dans sa section transversale le long de la direction d'écoulement et comportant des nervures (1) de forme variable, rigidifiant l'enveloppe extérieure (11) dans sa section transversale le long de la direction d'écoulement (12), avec courbure variable ;
les nervures (1) présentant une ceinture extérieure (2) flexible et fermée, solidaire de l'enveloppe extérieure (10), dont la forme extérieure correspond à l'allure de l'enveloppe extérieure (11), ainsi que plusieurs raidisseurs (3) de longueur constante agissant à leurs deux extrémités sur la ceinture extérieure (2) ;
au moins un actionneur mécanique ou aérodynamique (10) qui agit directement ou indirectement sur la ceinture extérieure (2) et/ou les raidisseurs (3) étant prévu pour la déformation des nervures (1), au moyen duquel on peut provoquer une variation voulue et pouvant être conservée de la forme des nervures (1), laquelle ne peut être obtenue pendant le fonctionnement par la charge maximale du composant (9).

2. Composant aérodynamique selon la revendication 1, **caractérisé en ce qu'**il est prévu au moins un actionneur mécanique (10) pour déformer les nervures (1), qui agit directement ou indirectement sur la ceinture extérieure (2) et/ou les raidisseurs (3), de manière qu'un actionnement de l'actionneur (10) modifie les angles d'inclinaison (7, 8) entre la ceinture extérieure (2) et les raidisseurs (3) agissant.

3. Composant aérodynamique selon la revendication 2, **caractérisé en ce qu'**un dispositif de déplacement du composant aérodynamique (9) est prévu pour déformer les nervures (1).

4. Composant aérodynamique selon la revendication 1, **caractérisé en ce qu'**au moins un actionneur aérodynamique (26) qui agit directement ou indirectement sur la ceinture extérieure (2) est prévu pour déformer les nervures (1).

5. Composant aérodynamique selon l'une des revendications 1 à 4, **caractérisé en ce que** les raidisseurs (3) agissent sur la ceinture extérieure (2) de manière à favoriser une déformation voulue des nervures (1) par des forces aérodynamiques.

6. Composant aérodynamique selon l'une des revendications 1 à 5, **caractérisé en ce que** les raidisseurs (3) agissent sur la ceinture extérieure (2) par l'intermédiaire d'articulations (4) terminales.

7. Composant aérodynamique selon l'une des revendications 1 à 6 avec un côté de surpression concave et un côté de dépression convexe, **caractérisé en ce que** la distance entre deux entretoises (3) voisines sur la ceinture extérieure (2) est plus petite sur le côté de surpression (5) concave que sur le côté de dépression (6) convexe.

8. Composant aérodynamique selon l'une des revendications 1 à 7, **caractérisé en ce que** plusieurs nervures (1), disposées latéralement côte à côte, peuvent être commandées différemment de manière à obtenir une torsion de l'enveloppe extérieure (11) autour d'un axe transversal.

9. Composant aérodynamique selon l'une des revendications 1 à 8, **caractérisé en ce que** la ceinture extérieure (2) des nervures (1) est intégrée dans l'enveloppe extérieure (11).
